# EUROPEAN PATENT APPLICATION

(11) **EP 4 831 012 A1**
(43) Date of publication of application: **28.10.2026**
(21) Application number: 25857911.9
(22) Date of filing: 05.12.2025
(51) Int. Cl.: B60R 19/52, B60K 11/08

(54) **VEHICLE ACTIVE GRILLE SHUTTER AND VEHICLE**

(30) Priority: 06.03.2025 CN 202510260820; 28.07.2025 CN 202521598551 U
(71) Applicant: Avatr Technology (Chongqing) Co., Ltd., Chongqing 401121 (CN)
(72) Inventor: ZHOU, Yun, Chongqing 401121 (CN)
(74) Representative: Elzaburu S.L.P.
(86) International application number: PCT/CN2025/140538
(87) International publication number: WO 2026/184163

(57) **Abstract**

The present application provides a vehicle active air-intake grille and vehicles, relating to the field of vehicle technology, to address the technical problem of small air intake volume of the vehicle active air-intake grille. The vehicle active air-intake grille includes a frame and an air-intake grille, where the frame has an air inlet, and the air-intake grille includes one or more vanes movably disposed on the frame, the vane is capable of moving to the inner side or the outer side of the air inlet to close or open the air inlet; when the air inlet needs to be closed, the vane moves from the outer side of the air inlet toward the inner side of the air inlet to reduce the opening-degree of the air inlet; when the air inlet needs to be opened, the vane moves from the inner side of the air inlet toward the outer side of the air inlet to increase the opening-degree of the air inlet. The present application can increase the air intake volume.

## Description

The present application claims priority to Chinese Patent Application No. 202510260820.2, entitled with "VEHICLE ACTIVE AIR-INTAKE GRILLE AND VEHICLE", and filed with the China National Intellectual Property Administration on March 6, 2025, which is hereby incorporated by reference in its entirety. The present application claims priority to Chinese Patent Application No. 202521598551.2, entitled with "VEHICLE ACTIVE AIR-INTAKE GRILLE AND VEHICLE", and filed with the China National Intellectual Property Administration on July 28, 2025, which is hereby incorporated by reference in its entirety.

### TECHNICAL FIELD

The present application relates to the field of vehicle technology, particularly to a vehicle active air-intake grille and vehicle.

### BACKGROUND

A vehicle active air-intake grille belongs to a technology used to optimize the automotive aerodynamic performance and improve fuel efficiency, which can control the air volume entering the engine compartment by adjusting the opening/closed state of the air-intake grille.

In the related technologies, the vehicle active air-intake grille includes a frame, an air-intake grille, a drive motor, and a connecting rod, where the frame has an air inlet, and the air-intake grille includes multiple vanes, which are disposed at the air inlet at intervals and rotatably connected to the frame; and the drive motor is respectively connected to each vane through the connecting rod to drive each vane to rotate such that the air inlet is opened or closed.

However, in the related technologies, after rotating each vane to open the air inlet, the location of the vane within the air inlet would affect the air intake volume of the air inlet, which gives rise to a technical problem of poor air intake volume.

### SUMMARY

In view of the above problem, the present application provides a vehicle active air-intake grille and a vehicle, aiming to solve the technical problem of small air intake volume of the vehicle active air-intake grille.

To achieve the above objective, the present application provides the following technical solutions.

A first aspect of the present application provides a vehicle active air-intake grille including a frame and an air-intake grille. The frame has an air inlet. The air-intake grille includes one or more vanes movably disposed on the frame, where the vane is capable of moving to an inner side of the air inlet or an outer side of the air inlet to close or open the air inlet; when the air inlet needs to be closed, the vane moves from the outer side of the air inlet toward the inner side of the air inlet to reduce an opening-degree of the air inlet; when the air inlet needs to be opened, the vane moves from the inner side of the air inlet toward the outer side of the air inlet to increase the opening-degree of the air inlet.

In some optional embodiments, corresponding to maximum opening-degree and minimum opening-degree of the air inlet, the vane has a first position and a second position relative to the frame; the vane is fixable relative to the frame at any position between the first position and the second position along a movement direction of the vane relative to the frame.

In some optional embodiments, the vehicle active air-intake grille further includes a drive mechanism, where the drive mechanism is configured to drive the vane to move relative to the frame and to keep the vane at a target position relative to the frame; and/or the vehicle active air-intake grille further includes a locking mechanism configured to lock or unlock a movement of the vane relative to the frame.

In some optional embodiments, the vehicle active air-intake grille further includes a drive mechanism and a detection mechanism, where the drive mechanism is electrically connected to the detection mechanism; the detection mechanism is configured to detect an operating condition information of a vehicle; and based on the operating condition information, the drive mechanism drives the vane to move relative to the frame and to keep the vane at a target position relative to the frame.

In some optional embodiments, when the air inlet is at the maximum opening-degree, the vane is located at the outer side of the air inlet, and a first anti-rotation component of the frame restricts the vane from moving from the second position toward the first position; when the air inlet is at the minimum opening-degree, the vane is located at the inner side of the air inlet, with multiple vanes being disposed sequentially along the movement direction, and a second anti-rotation component of the frame restricts the vane from moving from the first position toward the second position.

In some optional embodiments, when the vane is at least two in number, adjacent two vanes are respectively a driving vane and a driven vane; when the air inlet needs to be closed, the at least two vanes are sequentially disposed adjacent to each other in a second direction to close the air inlet together; when the air inlet needs to be opened, after the driving vane moves relative to the driven vane along a first direction to a side of the driven vane and moves relative to the driven vane along the second direction until it comes into contact with the driven vane, the driving vane drives the driven vane to move to the outer side of the air inlet; where the second direction has an angle with the first direction.

In some optional embodiments, the air-intake grille includes a first vane and a second vane, which are movably disposed on the frame, and the first vane and the second vane are capable of moving to the inner side of the air inlet or the outer side of the air inlet to close or open the air inlet; when the air inlet needs to be closed, the first vane and the second vane move from the outer side of the air inlet to the inner side of the air inlet, and the first vane and the second vane are disposed adjacent to each other in the second direction to close the air inlet together; when the air inlet needs to be opened, after the first vane moves relative to the second vane along the first direction to a side of the second vane and moves relative to the second vane along the second direction until it comes into contact the second vane, the first vane drives the second vane to move to the outer side of the air inlet.

In some optional embodiments, along the first direction, a movement area extending along the second direction is provided at a rear side of the driven vane, and the movement area is configured to allow the driving vane to move; when the air inlet needs to be opened, the driving vane moves to a position aligned with the movement area along the first direction, and the driving vane moves relative to the driven vane within the movement area.

In some optional embodiments, the driven vane has a first limiting structure; when the driving vane moves relative to the driven vane within the movement area until it comes into contact the first limiting structure, the driving vane drives the driven vane to move until the driven vane moves to the outer side of the air inlet.

In some optional embodiments, the first limiting structure is disposed on an end of the driven vane close to an edge of the frame; when the driving vane and the driven vane are fully overlapped with each other along the first direction, an end of the driving vane is in contact with the first limiting structure.

In some optional embodiments, the driving vane is provided with a first sliding portion, and a second sliding portion matching the first sliding portion is disposed within the movement area, where the second sliding portion extends along the second direction, and the driving vane moves along the second sliding portion via the first sliding portion.

In some optional embodiments, a rear side of the second vane is provided with a third sliding portion extending along the second direction, the frame is provided with a fourth sliding portion at a position corresponding to the third sliding portion, and the third sliding portion is configured to be slidably connected to the fourth sliding portion.

In some optional embodiments, the fourth sliding portion is provided with two second limiting structures that are disposed at intervals along an extension direction of the fourth sliding portion, and the third sliding portion is configured to slide between the two second limiting structures.

In some optional embodiments, the driving vane located at an end of the air-intake grille is a drive vane; the vehicle active air-intake grille further includes a first drive mechanism and a second drive mechanism; the first drive mechanism and the second drive mechanism are respectively connected to the drive vane, and the first drive mechanism is configured to drive the drive vane to move along the first direction; the second drive mechanism is configured to drive the drive vane to move along the second direction; when the driving vane is fully overlapped with corresponding driven vane along the first direction, the driving vane is abutted against the corresponding driven vane along the first direction to drive the driven vane to move along the first direction.

In some optional embodiments, the first drive mechanism includes a first drive motor and a connecting rod, and the connecting rod is connected between the first drive motor and the drive vane such that the first drive motor drives the drive vane to move in the first direction by the connecting rod.

In some optional embodiments, the connecting rod is provided with a guide rail; the frame is provided with a guide groove matching the guide rail and extending along the first direction; when the first drive motor drives the connecting rod to move the drive vane, the guide rail moves along an extension direction of the guide groove.

In some optional embodiments, the second drive mechanism includes a second drive motor and a telescopic rod; the telescopic rod is configured to extend and retract along the second direction; one end of the telescopic rod is connected to the drive vane and other end of the telescopic rod is connected to the second drive motor; when the second drive motor drives the telescopic rod to extend and retract, the telescopic rod drives the drive vane to move along the second direction.

In some optional embodiments, the frame includes a frame body, a cross beam, and a longitudinal beam; the frame body has a notch, and both of the cross beam and the longitudinal beam are disposed within the notch and respectively connected to the frame body; the cross beam extends along the second direction, and the cross beam and the longitudinal beam are arranged to intersect so as to isolate the notch into at least two air intake groups, which are oppositely disposed on two opposite sides of the longitudinal beam; each air intake group includes at least two air inlets sequentially disposed at intervals along a third direction, and each air inlet is movably provided with the air-intake grille to open or close the air inlet; the third direction has an angle with the first direction and the second direction respectively.

In some optional embodiments, the first drive mechanism is disposed on the longitudinal beam and is respectively connected to drive vanes on each air inlet of each air intake group, to drive each drive vane to move synchronously along the first direction; there are two second drive mechanisms which are respectively disposed on two opposite sides of the longitudinal beam, and the second drive mechanism is connected to each drive vane in the air intake group at a corresponding position to drive each drive vane in corresponding air intake group to move synchronously along the second direction.

A second aspect of the present application provides a vehicle including a vehicle body and the vehicle active air-intake grille provided in the first aspect, where the vehicle active air-intake grille is disposed on the vehicle body.

In the vehicle active air-intake grille and the vehicle provided by the present application, the frame has an air inlet; the air-intake grille includes one or more vanes, which is movably disposed on the frame to move relative to the frame. The vane can move to the inner side of the air inlet to close the air inlet, and can also move to the outer side of the air inlet to open the air inlet. Based on this, when the air inlet needs to be closed, the vane moves from the outer side of the air inlet toward the inner side of the air inlet, reducing the opening-degree of the air inlet; when the air inlet needs to be opened, the vane moves from the air inlet toward the outer side of the air inlet, increasing the opening-degree of the air inlet. It could be understood that when the vane is fully moved to the outer side of the inlet, the vane does not block the air inlet, i.e., the flowing cross-sectional area of the airflow remains consistent with the cross-sectional area of the air inlet, thereby fully utilizing the air intake function of the air inlet. Compared to related technologies where the air inlet still would be blocked even rotatably arranged vane is at the maximum opening-degree, the vehicle active air-intake grille of the embodiments of present application would not block the air inlet when it is at the maximum opening-degree. This eliminates the limitation of vane on maximum air intake volume, thereby increasing maximum air intake volume, reducing wind resistance, and enhancing the heat dispersion performance and fuel economy of vehicles.

In addition to the technical problems solved by the embodiments of the present application, the technical features constituting the technical solutions, and the beneficial effects brought by the technical features of these technical solutions as described above, other technical problems that can be solved by the vehicle active air-intake grille and the vehicle provided by the embodiments of the present application, other technical features included in the technical solutions, and the beneficial effects brought by these technical features will be described in further detail in the specific implementation.

### BRIEF DESCRIPTION OF DRAWINGS

To more clearly illustrate the technical solutions of the embodiments of the present application or the prior art, the drawings required for describing the embodiments or the prior art will be briefly introduced below. Obviously, the drawings described below are some embodiments of this application, and for those skilled in the art, other drawings may also be obtained based on these drawings without creative labor.
FIG. 1 is a schematic view of a state where an air inlet of a vehicle active air-intake grille provided by an embodiment of the present application is closed.
FIG. 2 is a schematic cross-sectional view of FIG. 1 taken along line A-A.
FIG. 3 is a schematic front view of a state where a driving vane moves to a rear side of a driven vane in FIG. 1.
FIG. 4 is a schematic rear view of a state where the driving vane moves to the rear side of the driven vane in FIG. 1.
FIG. 5 is a partial enlarged schematic view of section B in FIG. 4.
FIG. 6 is a partial structural schematic view of a state where the driving vane moves to the rear side of the driven vane in an embodiment of the present application.
FIG. 7 is a schematic front view of a state where the air inlet of the vehicle active air-intake grille provided by an embodiment of the present application is fully opened.
FIG. 8 is a schematic rear view of a state where the air inlet of the vehicle active air-intake grille provided by an embodiment of the present application is fully opened.
FIG. 9 is partial enlarged schematic view of section C in FIG. 8.
FIG. 10 is a structural schematic view of the vehicle active air-intake grille provided by an embodiment of the present application, with the air inlet being fully closed.
FIG. 11 is a partial structural schematic view of the vehicle active air-intake grille provided by an embodiment of the present application, with the air inlet being fully closed.
FIG. 12 is a schematic view of the vehicle active air-intake grille provided by an embodiment of the present application from another perspective, with the air inlet being fully closed.
FIG. 13 is a partial structural schematic view of FIG. 12.
FIG. 14 is an enlarged schematic view of section D in FIG. 13.
FIG. 15 is a partial structural schematic view of the vehicle active air-intake grille provided by an embodiment of the present application from further perspective.
FIG. 16 is a partial structural schematic view of FIG. 15.
FIG. 17 is a partial enlarged schematic view of section E in FIG. 16.
FIG. 18 is a schematic view of a state where a first vane is opened in the vehicle active air-intake grille provided by an embodiment of the present application.
FIG. 19 is a partial structural schematic view of FIG. 18.
FIG. 20 is a structural schematic view of multiple vanes being all closed in the vehicle active air-intake grille provided by an embodiment of the present application.
FIG. 21 is a structural schematic view of multiple vanes being partially opened in the vehicle active air-intake grille provided by an embodiment of the present application.
FIG. 22 is a structural schematic view of a first drive mechanism and a second drive mechanism when multiple vanes are all in a closed state in the vehicle active air-intake grille provided by an embodiment of the present application.
FIG. 23 is a structural schematic view of the first drive mechanism and the second drive mechanism when multiple vanes are all in an opened state in the vehicle active air-intake grille provided by an embodiment of the present application.
FIG. 24 is a structural schematic view of the first drive mechanism and the second drive mechanism in the vehicle active air-intake grille provided by an embodiment of the present application.
FIG. 25 is a structural schematic view of a first vane, a second vane, and a third vane all being closed in the vehicle active air-intake grille provided by an embodiment of the present application.
FIG. 26 is a structural schematic view of the first vane being opened in the vehicle active air-intake grille provided by an embodiment of the present application.
FIG. 27 is a structural schematic view of the first vane and second vane being opened in the vehicle active air-intake grille provided by an embodiment of the present application.
FIG. 28 is a structural schematic diagram of the first vane, second vane, and third vane all being opened in the vehicle active air-intake grille provided by an embodiment of the present application.

### Reference numbers in the drawings:

100-vehicle active air-intake grille; 110-frame; 111-air inlet; 111a-air intake group; 112-frame body; 113-cross beam; 114-fourth sliding portion; 1141-second limiting structure; 115-guide groove; 116-longitudinal beam; 120-air-intake grille; 121-first vane; 1211-first sliding portion; 122-second vane; 1221-first limiting structure; 1222-second sliding portion; 1223-third sliding portion; 123-third vane; 130-first drive mechanism; 131-first drive motor; 132-connecting rod; 133-guide rail; 140-second drive mechanism; 141-second drive motor; 142-telescopic rod; 143-fixed bracket; X-first direction; Y-second direction; Z-third direction.

### DETAILED DESCRIPTION OF EMBODIMENTS

To clarify the objectives, technical solutions, and advantages of the embodiments of the present application, the technical solutions of the embodiments of the present application will be clearly and completely described below with reference to the accompanying drawings of the embodiments of the present application. Obviously, the described embodiments represent a part of the embodiments of the present application, not all of them. All other embodiments obtained by those skilled in the art based on the embodiments of the present application without creative labor fall within the scope of protection of the present application. Without conflicting, the following embodiments and features thereof could be combined with each other.

A vehicle active air-intake grille is typically disposed at the front side (e.g., front face) of a vehicle and belongs to a technology used to optimize the aerodynamic performance of the vehicle and improve fuel efficiency, which can control the air intake volume entering the engine compartment by adjusting the opening/closed state of the air-intake grille. For example, when the vehicle is traveling at a low speed or the engine requires more cooling, the air-intake grille would be opened to increase airflow into a radiator, achieving rapid cooling; when the vehicle is traveling at a high speed or the engine's cooling demand is low, the air-intake grille would reduce its opening or be closed to minimize air resistance, thereby improving fuel economy.

In some embodiments, the vehicle active air-intake grille includes a frame, an air-intake grille, a drive motor, and a connecting rod. The frame has an air inlet, and the air-intake grille includes multiple vanes, which are sequentially disposed at intervals along the length direction or width direction of the air inlet and rotatably connected to the frame. The drive motor is respectively connected to multiple vanes through the connecting rod and is configured to drive the vanes to rotate, enabling multiple vanes to close or open the air inlet together. That is, the area of the air inlet blocked by the vane is adjusted by rotation of the vanes, thereby regulating the air intake volume of the air inlet; when the vanes rotate to the position where its projected area along the air intake direction is minimized, the air intake volume of the air inlet reaches maximum.

However, in the above embodiment, when the plurality of vanes of the air-intake grille rotate to the position where the air intake volume of the air inlet reaches maximum, since the vanes are still within the air inlet and only the area of the air inlet blocked by the vanes reaches minimum, the vanes may still block the air inlet, leading to the technical problem of insufficient air-intake volume of the air inlet.

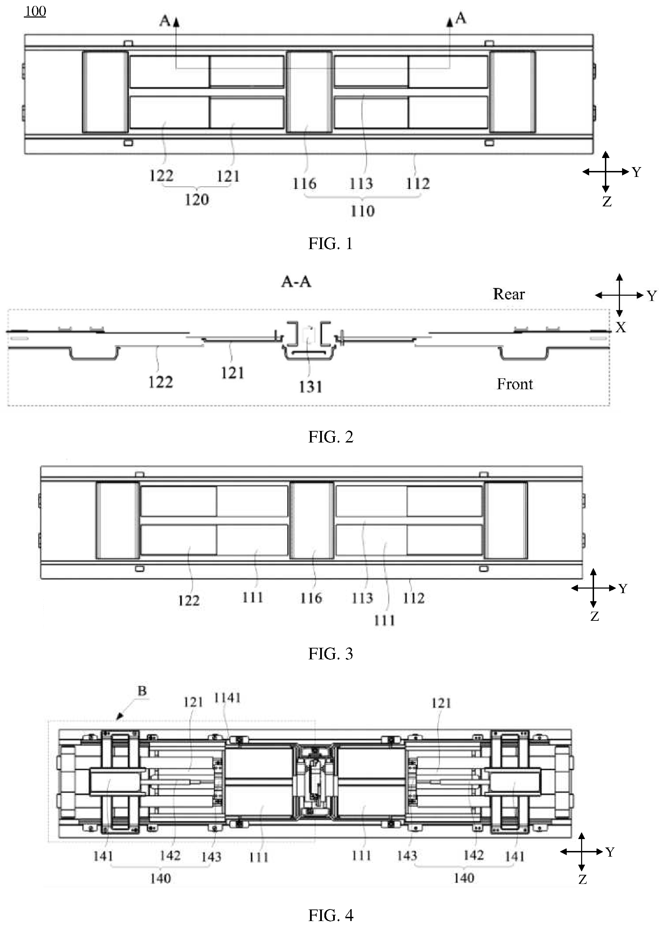

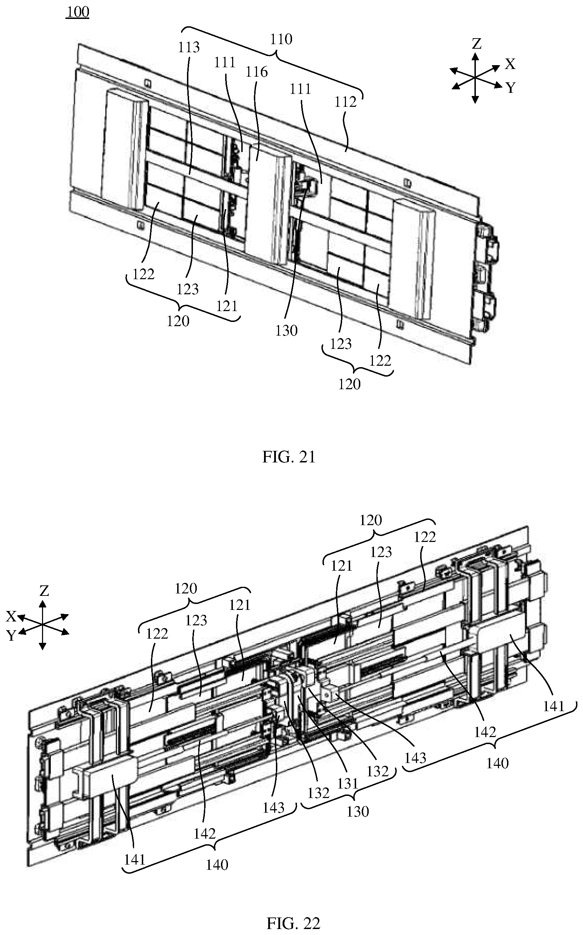

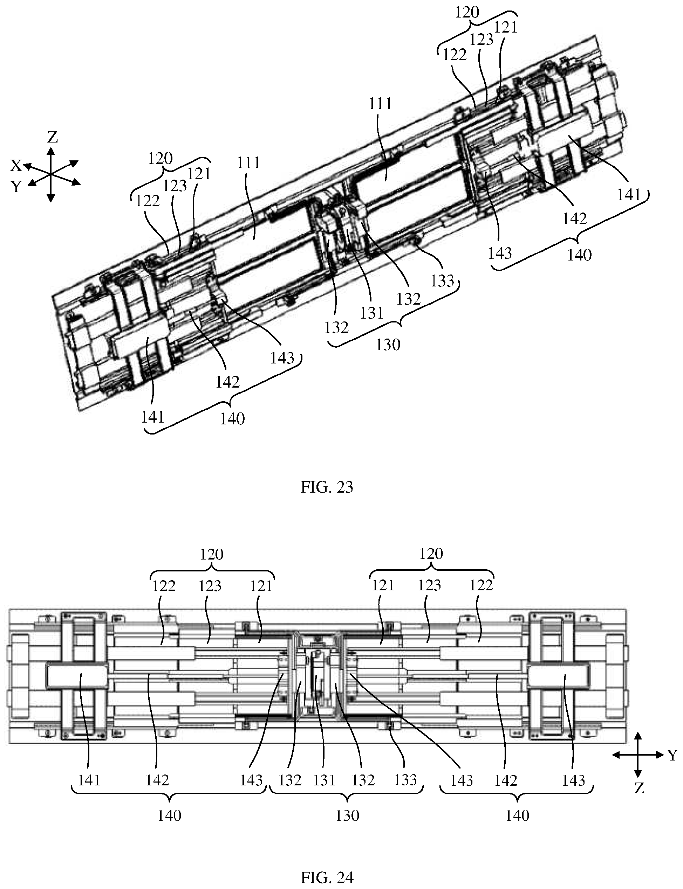

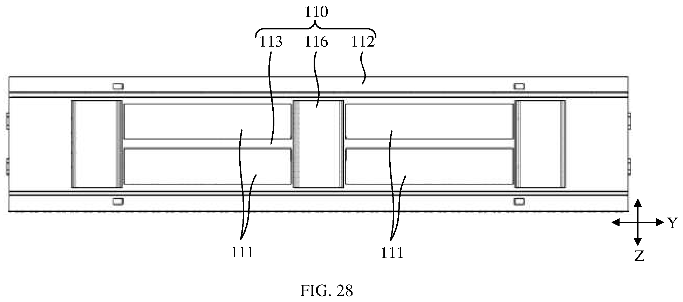

Based on above problem, the present application provides a vehicle active air-intake grille 100, as shown in FIGS. 1-9 and FIGS. 20-28. The vehicle active air-intake grille 100 includes a frame 110 and an air-intake grille 120. The frame 110 has an air inlet 111; the air-intake grille 120 includes one or more vanes (e.g., a first vane 121, a second vane 122, or a third vane 123), which is movably disposed on the frame 110. The vane can move to the inner side of the air inlet 111 or the outer side of the air inlet 111 to close or open the air inlet 111; when the air inlet 111 needs to be closed, the vane move from the outer side of the air inlet 111 toward the inner side of the air inlet 111 to reduce the opening-degree of the air inlet 111; when the air inlet 111 needs to be opened, the vane move from the inner side of the air inlet 111 toward the outer side of the air inlet 111 to increase the opening-degree of the air inlet 111.

For the convenience of explanation, the first direction X is set as the air intake direction of the air inlet 111. The second direction Y has an angle with the first direction X. For example, the second direction Y is a direction that is perpendicular or approximately perpendicular to the first direction X; the third direction Z has an angle with each of the second direction Y and the third direction Z respectively. For example, the third direction Z is a direction that is perpendicular or approximately perpendicular to each of the first direction X and the second direction Y. In some examples, the first direction X is either the longitudinal direction of the vehicle or the travelling direction of vehicle; the second direction Y is the width direction of the vehicle; and the third direction Z is the height direction of the vehicle.

In some examples, the inner side of the air inlet 111 refers to the position that lies within the projection area of the air inlet 111 along its projection on the first direction X, for example, the projection of the vane overlaps partially or completely with the projection of the air inlet 111 so as to close the air inlet 111. The outer side of the air inlet 111 refers to the position that lies outside the projection area of the air inlet 111 along its projection on the first direction X, for example, the projection of the vane does not overlap with the projection of the air inlet 111 to open the air inlet 111.

In some examples, the opening-degree of the air inlet 111 refers to the cross-sectional size that allows airflow to pass through. When the vane blocks the air inlet 111 to a small extent, the air inlet 111 has a larger opening-degree, and the cross-sectional size allowing airflow to pass through is larger, leading to a larger air intake volume; conversely, when the vane blocks the air inlet 111 to a large extent, the air inlet 111 has a smaller opening-degree, and the cross-sectional size allowing airflow to pass through is smaller, leading to a smaller air intake volume.

It should be clarified that opening the air inlet 111 refers to the vane moving relative to the frame 110 and increasing the cross-sectional size that allows airflow to pass through, i.e., increasing the opening-degree of air inlet 111, where the air inlet 111 has the maximum opening-degree when it is fully opened; closing the air inlet 111 refers to the vane moving relative to the frame 110 and reducing the cross-sectional size that allows airflow to pass through, i.e., decreasing the opening-degree of air inlet 111, where the air inlet 111 has the minimum opening-degree when it is fully closed. The opening-degree of the inlet 111 can be adjusted between the minimum and maximum opening-degrees.

In the embodiments of the present application, the connection between the vane and the frame 110 may be a rotational connection, a slidable connection, or the like, provided that the vane can move to the outer or inner side of the air inlet 111.

When the vane rotates relative to the frame 110, the rotational axis of the vane relative to the frame 110 may be any axis perpendicular to the first direction X. For example, the rotational axis of the vane relative to the frame 110 is parallel to the second direction Y or the third direction Z. When the vane slides relative to the frame 110, the movement direction of the vane relative to the frame 110 may be any direction having an angle with the first direction X, for example, the vane moves relative to the frame 110 along the second direction Y and/or the third direction Z. In some examples, the vane may move relative to the frame 110 along multiple directions, for example, the vane may move relative to the frame 110 along the first direction X and the second direction Y, respectively.

In some examples, the movement of the vane relative to the frame 110 may be achieved through deformation of the vane. For example, the vane has a wavy shape and extends and contracts along the second direction Y or third direction Z, adjusting the opening-degree of the air inlet 111. For another example, the vane is an elastic component capable of stretching or contracting under an external force to regulate the opening-degree of the air inlet 111. For further example, the vane is a deformable component such as shape memory metal, and its dimension is changed through electrostriction, magnetostriction, or the like to regulate the opening-degree of the air inlet 111.

In the embodiments of the present application, a single air inlet 111 may be correspondingly provided with one or more (including two) vanes. Multiple vanes may move independently relative to the frame 110 and/or cooperatively move relative to the frame 110. The plurality of vanes may be interconnected or individually connected to the frame 110. For instance, the vehicle active air-intake grille 100 may include an even number including 2, 4, 8, 10, 12 or more of columns of vanes, where the plurality of vanes along the third direction Z belong to the same one column.

In some examples, adjacent two vanes are rotationally connected, for example, multiple vanes are rotationally connected in sequence. Multiple vanes may be folded to form a corrugated structure to open the air inlet 111; and also, be unfolded to form a plane structure to close the air inlet 111.

In other examples, adjacent two vanes are connected to each other in a slidable manner. The vane using the slidable connection has more support points and higher structural strength, and can withstand stronger wind pressure. For instance, multiple vanes are slidingly connected in sequence. Multiple vanes may switch to a state where they are stacked along the first direction X to open the air inlet 111; and multiple vanes may also be sequentially arranged to form a plane structure to close the air inlet 111.

In some examples, the slidable connection and relative sliding may refer to the movement of the vane along a guide rail 133, a slide groove, etc.; and may also refer to the movement path of the vane relative to the frame 110 being a straight path.

In the technical solution of the embodiments of the present application, the frame 110 has the air inlet 111; the air-intake grille 120 includes one or more vanes, which is movably disposed on the frame 110, such that the vane moves relative to the frame 110. The vane can move to the inner side of the air inlet 111 to close the air inlet 111, and can also move to the outer side of the air inlet 111 to open the air inlet 111.

Based on this, when the air inlet 111 needs to be closed, the vane moves from the outer side of the air inlet 111 toward the inner side of the air inlet 111, reducing the opening-degree of the air inlet 111; when the air inlet 111 needs to be opened, the vane moves from the inner side of the air inlet 111 toward the outer side of the air inlet 111, increasing the opening-degree of the air inlet 111. It could be understood that when the vane is fully moved to the outer side of the air inlet 111, the vane does not block the air inlet 111, i.e., the flowing cross-sectional area of the airflow remains consistent with the cross-sectional area of the air inlet 111, thereby fully utilizing the air intake function of the air inlet 111. Compared with the solution in the related technologies where the rotatably-arranged vane still blocks the air inlet 111 when the air inlet 111 is at its maximum opening-degree, the vehicle active air-intake grille 100 of the embodiment of present application would not block the air inlet 111 when the air inlet 111 is at the maximum opening-degree. This eliminates the limitation of vane on maximum air intake volume so as to increase the maximum air intake volume; reducing wind resistance; and enhancing the heat dispersion and fuel economy of vehicles. By increasing the maximum air intake volume of the air inlet 111, it also facilitates adaptation to more thermal management solutions of vehicle and improves the vehicle's environmental adaptability, such as adapting to climbing demands and extreme weather conditions such as high temperatures.

Referring to FIGS. 1, 7, 20 and 21, in some embodiments of the present application, the vane has a first position and a second position relative to the frame 110, corresponding to the maximum and minimum openings of the air inlet 111; along the movement direction of the vane relative to the frame 110, the vane is fixable relative to the frame 110 at any position between the first position and the second position.

It could be understood that when the vane completely block the air inlet 111, the air inlet 111 has a minimum opening-degree (0% opening-degree), with the cross-sectional size allowing airflow to pass through being 0 or close to 0, and the airflow could not pass through the air inlet 111; when the vane fully opens the air inlet 111, the air inlet 111 has a maximum opening-degree (100% opening-degree), with the cross-sectional size allowing airflow to pass through being the actual size of the air inlet 111, and the airflow could pass through the inlet 111 without obstruction.

In the embodiments of the present application, the vanes is fixable relative to the frame 110 at any position between the first position and the second position, which means that the range between the first position and the second position constitutes the stroke of vane, and the vane can remain stationary relative to the frame 110 at any position within this stroke range, i.e., it can stay at any position. It can be understood that when the vane is at different positions, the shielding area it imposes on the air inlet 111 varies, i.e., the air inlet 111 has different air intake volumes.

It should be noted that when there are multiple vanes, different vanes may have different strokes. That is, different vanes have different first positions and second positions. The first position of each vane corresponds to the air inlet 111 having the maximum opening-degree, while the second position of each vane corresponds to the air inlet 111 having the minimum opening-degree.

In the technical solution of the present application, when the vane is in the first position, the air inlet 111 has the maximum opening-degree, for example, the vane is completely located on the outer side of the air inlet 111, fully opening the air inlet 111; when the vane is in the second position, the air inlet 111 has the minimum opening-degree, for example, the vane is completely positioned on the inner side of the air inlet 111, fully blocking the air inlet 111. The vane is fixable relative to the frame 110 at any position between the first position and the second position, enabling stepless adjustment of the air inlet 111 between the minimum and maximum opening-degrees to meet various requirements of air intake volume.

Referring to FIGS. 4, 5, 6, 22, 23 and 24, in some embodiments of the present application, the vehicle active air-intake grille 100 further includes a drive mechanism (such as a first drive mechanism 130 and a second drive mechanism 140), which is configured to drive the vane to move relative to the frame 110 and to hold the vane at a target position relative to the frame 110; and/or, the vehicle active air-intake grille 100 further includes a locking mechanism for locking or unlocking the movement of the vane relative to the frame 110.

In the embodiments of the present application, the drive mechanism may include a drive component that outputs rotational power such as motors or rotary cylinders, and may also include a drive component that outputs linear power such as cylinders, hydraulic cylinders, or electric telescopic rods. Additionally, the drive mechanism may further include a transmission assembly, which is connected between the drive component and the vane. The transmission assembly includes one of a gear assembly, a rack-and-pinion, a worm gear, a ball screw, a connecting rod assembly, a belt transmission assembly, a chain transmission assembly, and a flexible transmission assembly, or a combination thereof.

In some examples, the drive mechanism may be self-locking, restricting the movement of the vane relative to the frame 110 through the self-locking of the drive mechanism, thereby maintaining the vane at a target position relative to the frame 110. In other examples, the locking mechanism may lock the movement of the vane relative to the frame 110 to maintain the vane at a target position relative to the frame 110. The locking mechanism may be a caliper, a clamping member, etc.; and the embodiments of the present application do not limit the locking mechanism.

In some examples, the target position is any position between the first position and the second position corresponding to the vane. The target position may be set by the user or by the control terminal of the vehicle based on operating condition information of the vehicle.

In the technical solution of the embodiments of the present application, higher control precision is achieved by providing the drive mechanism to drive the vane relative to the frame 110; and the drive mechanism can also maintain the vane at the target position through self-locking, which has a simple structure and is easy to implement. By providing the locking mechanism, the locking mechanism locks the vane relative to the frame 110 to keep the vane at the target position, enhancing positioning stability; and the locking mechanism unlocks the vane relative to the frame 110 to allow the drive mechanism to drive the vane to move relative to the frame 110.

In some embodiments of the present application, the vehicle active air-intake grille 100 further includes a drive mechanism and a detection mechanism (not shown in the drawings). The drive mechanism is electrically connected to the detection mechanism. The detection mechanism is configured to detect the operating condition information of the vehicle. Based on the operating condition information, the drive mechanism drives the vane to move relative to the frame 110 and maintains the vane relative to the frame 110 at the target position.

In the embodiments of the present application, the detection mechanism may include a temperature sensor, a position sensor, a humidity sensor, a speed sensor, an acceleration sensor, and the like. The detection mechanism may be connected to the control terminal of the vehicle.

In the embodiments of the present application, the operating condition information of the vehicle at least includes the vehicle's information such as temperature information, traveling speed, or output power information. For example, the operating condition information includes temperature information; and when the engine room has a high temperature, the drive mechanism drives the vane to move from the second position to the first position based on the operating condition information, thereby increasing the opening-degree of the air inlet 111; when the engine room has a low temperature, the drive mechanism drives the vane from the first position to the second position based on the operating condition information, thereby reducing the opening-degree of the air inlet 111.

Additionally, the drive mechanism may also maintain the vane relative to the frame 110 at the target position based on the operating condition information, such that the opening-degree of the air inlet 111 is adapted with the current operating condition information of the vehicle. The drive mechanism can promptly adjust the target position based on the change of the operating condition information to optimize the performance of the vehicle.

In the technical solution of the embodiment of the present application, by providing the drive mechanism and the detection mechanism, the drive mechanism is configured to drive the vane to move relative to the frame 110 and maintain the vane at the target position relative to the frame 110, thereby meeting the various requirements for the opening-degree of the air inlet 111. The detection mechanism can detect the operating condition information of the vehicle and adjust the opening-degree of the air inlet 111 based on the operating condition information to timely balance the vehicle's operational demands, optimizing the performance of the vehicle.

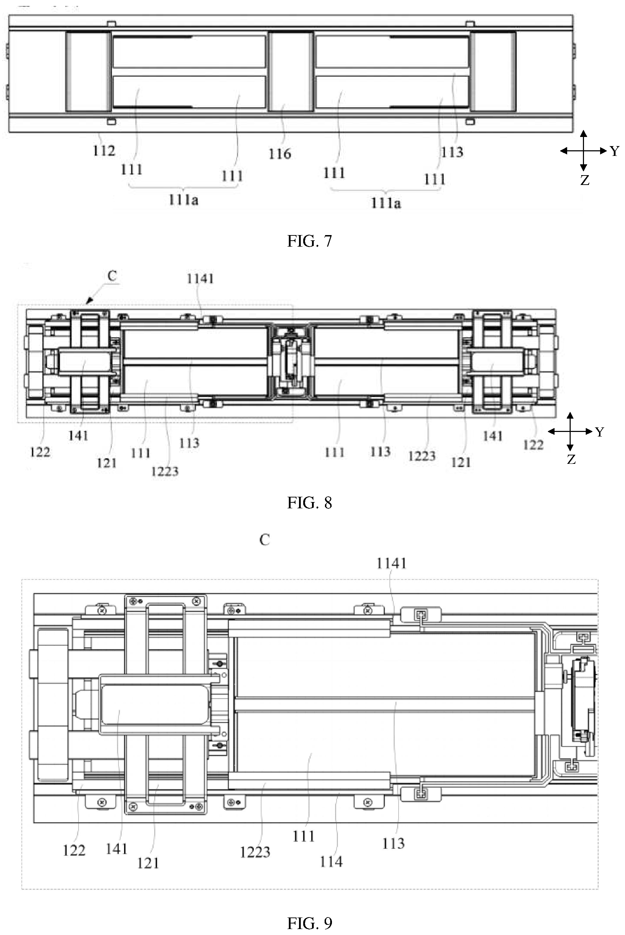

Referring to FIGS. 7, 9, 23 and 28, in some embodiments of the present application, when the air inlet 111 has the maximum opening-degree, all vanes are located on the outer side of the air inlet 111, and the first anti-rotation component of the frame 110 restricts the vanes from moving from the second position toward the first position. Referring to FIGS. 1, 2, 22 and 25, when the air inlet 111 has the minimum opening-degree, all vanes are located on the inner side of the air inlet 111, and multiple vanes are arranged sequentially along the movement direction and the second anti-rotation member of the frame 110 restricts the vanes from moving from the first position toward the second position.

In some examples, the air inlet 111 is provided with a single vane correspondingly. The first and second anti-rotation components are fixed relative to the frame 110, with one being positioned at the first position and the other being positioned at the second position. The first and second anti-rotation components restrict the movement of the vane by abutting against the vane.

In other examples, the air inlet 111 is provided with multiple vanes correspondingly. Each vane may be correspondingly provided with a first anti-rotation component; and a single first anti-rotation component may also be provided for the vanes, thereby achieving blocking of multiple vanes by the single first anti-rotation component, and a simpler structure; correspondingly, one or more second anti-rotation components may also be provided.

It should be noted that multiple first anti-rotation components may all be disposed on the frame 110; and alternatively, some first anti-rotation components are connected to the vanes, and the first anti-rotation components on multiple vanes sequentially abut against adjacent vanes to achieve the positioning of the multiple vanes. Correspondingly, multiple second anti-rotation components may be disposed on frame 110; and alternatively, some second anti-rotation components may be connected to the vanes, and the second anti-rotation components on multiple vanes sequentially abut against adjacent vanes to achieve the positioning of the multiple vanes.

In some examples, multiple vanes are arranged sequentially along the direction of movement, meaning that multiple vanes are arranged sequentially along the second direction Y or the third direction Z.

In the technical solution of embodiments of the present application, by providing the first and second anti-rotation components, the first anti-rotation component can promptly stop the movement of the vane from the second position toward the first position, and the second anti-rotation component can promptly stop the movement of the vane from the first position toward the second position, thereby restricting the stroke of the vane within a reasonable range.

Referring to FIGS. 3, 4, 20 and 21, in some embodiments of the present application, when there are at least two vanes, adjacent two vanes are respectively a driving vane and a driven vane. When the air inlet 111 needs to be closed, at least two vanes are sequentially disposed adjacent to each other along the second direction Y to close the air inlet 111 together; when the air inlet 111 needs to be opened, the driving vane moves to a side of the driven vane along the first direction X relative to the driven vane and moves along the second direction Y relative to the driven vane until it is in contact with the driven vane, the driving vane drives the driven vane to move to the outer side of the air inlet 111, in which the second direction Y has an angle with the first direction X.

In the embodiments of the present application, at least two vanes are sequentially disposed adjacent to each other along the second direction Y, meaning that at least two vanes are disposed in sequence along the second direction Y, and when the at least two vanes are projected along the second direction Y, the projections of adjacent two vanes overlap with each other. It can be understood that when all vanes are sequentially disposed adjacent to each other along the second direction Y, the air inlet 111 is completely blocked, and the air inlet 111 has a minimum opening-degree.

In some examples, the driving vane refers to the one of adjacent two vanes with a shorter force transmission path to the drive mechanism, while the driven vane is the one of adjacent two vanes with a longer force transmission path. The driving vane transmits the driving force from the drive mechanism to the driven vane, such that the driving vane drives the driven vane to move.

It can be understood that, among the multiple vanes connected in sequence, the vane directly connected to the drive mechanism is the driving vane. Along the direction of drive force transmission, the vane at the middle position is a driven vane relative to the preceding vane and a driving vane relative to the subsequent vane, and the vane at the end position is a driven vane.

In some examples, the inlet 111 is provided with two vanes, which are a first vane 121 and a second vane 122 respectively. The first vane 121 is connected to the drive mechanism and can drive the second vane 122 to move. The first vane 121 is the driving vane, and the second vane 122 is the driven vane.

In other examples, the air inlet 111 is provided with three vanes, which are a first vane 121, a second vane 122, and a third vane 123 respectively. The first vane 121 is connected to the drive mechanism, and the third vane 123 is provided between the first vane 121 and the second vane 122. The first vane 121 is the driving vane, the second vane 122 is a driven vane, and the third vane 123 is a driven vane relative to the first vane 121 while being a driving vane relative to the second vane 122.

In some examples, the driving vane moves relative to the driven vane along the first direction X to a side of the driven vane, in which it may move to the front of the driven vane or to the rear of the driven vane. It should be noted that when multiple driving vanes and driven vanes are provided, all driving vanes move to the front of corresponding driven vanes, or all driving vanes move to the rear of corresponding driven vanes. The front of the driven vane may be a direction facing the exterior of the vehicle, while the rear of the driven vane is a direction facing the interior of the vehicle.

In some examples, the drive mechanism includes a first drive mechanism 130 and a second drive mechanism 140. The first drive mechanism 130 is configured to drive the driving vane to move relative to the driven vane along the first direction X, while the second drive mechanism 140 is configured to drive the vane to move relative to the frame 110 along the second direction Y.

In some examples, a locking assembly is provided between the driving vane and the driven vane. When the driving vane needs to move relative to the driven vane, the locking assembly unlocks the driving vane from the driven vane; when the driving vane needs to move synchronously with the driven vane, the locking assembly locks the driving vane with the driven vane.

In some examples, multiple vanes move synchronously during the adjustment of the opening degree of the air inlet 111 between its minimum opening-degree and maximum opening-degree. In other examples, multiple vanes move synchronously in sequence during opening adjustment of the air inlet 111. Specifically, when the driving vane is not aligned with the corresponding driven vane along the first direction X, the driving vane moves and the driven vane keeps still; when the driving vane is aligned with the corresponding driven vane along the first direction X, the driving vane drives the driven vane to move synchronously.

For example, the air inlet 111 is provided with *n* vanes, where *n* is an integer greater than 2. As the opening-degree of the air inlet 111 increases from 0% to 100%, the first drive mechanism 130 drives the first vane to move relative to the second vane along the first direction X to the rear of the second vane. When there is preset spacing between the first vane and the second vane along the first direction X, the second drive mechanism 140 drives the first vane to move relative to the second vane along the second direction Y; and when the first and second vanes are aligned with each other along the first direction X, the first and second vanes are abutted against each other along the second direction Y. The first drive mechanism 130 drives the second vane via the first vane to synchronously move along the first direction X to the rear of the third vane; and when there is preset spacing between the second vane and the third vane along the first direction X, the second drive mechanism 140 drives the first vane to bring the second vane to move synchronously along the second direction Y relative to the third vane, and when the second vane and third vanes are aligned with each other along the first direction X, the second vane and third vane are abutted against each other along the second direction Y and the first drive mechanism 130 drives the second vane and third vane via the first vane to move synchronously along the first direction X to the rear of the fourth vane ......; multiple vanes are sequentially driven in this manner until the n-th vane moves to the outer side of the air inlet 111.

As the opening-degree of the air inlet 111 reduces from 100% to 0%, the second drive mechanism 140 drives the n vanes to move synchronously relative to the frame 110 along the second direction Y until the n-th vane moves to the inner side of the air inlet 111, and the first drive mechanism 130 drives the n vanes to move synchronously relative to the frame 110 along the first direction X to the position where the n-th vane is aligned with the frame 110 along the second direction Y; the second drive mechanism 140 drives n-1 vanes except for the n-th vane to move synchronously relative to the frame 110 along the second direction Y until the (n-1)th vane moves to the inner side of the air inlet 111 and the (n-1)th vane is offset from the n-th vane along the first direction X; and the first drive mechanism 130 drives the n-1 vanes except for the n-th vane to move synchronously relative to the n-th vane along the first direction X until the (n-1)th vane is aligned with the n-th vane along the second direction Y ......; multiple vanes are driven sequentially in this manner until the first vane is aligned with the second vane along the second direction Y.

Alternatively, as the opening-degree of the air inlet 111 reduces from 100% to 0%, the second drive mechanism 140 drives the first vane to move relative to the second vane along the second direction Y, and when the first and second vanes are offset along the first direction X, the first drive mechanism 130 drives the first vane to move relative to the second vane along the first direction X until the first vane is aligned with the second vane along the second direction Y; the second drive mechanism 140 drives the first vane to bring the second vane to move relative to the third vane along the second direction Y, and when the second vane and the third vane are offset along the first direction X, the first drive mechanism 130 drives the first vane to bring the second vane to move relative to the third vane along the first direction X until the second vane is aligned with the third vane along the second direction Y; ...... Multiple vanes are sequentially driven in this manner until the n-th vane moves to the inner side of the air inlet 111, and all n vanes are aligned with each other along the second direction Y.

In the embodiments of the present application, the preset spacing may be any value greater than 0 mm, exemplarily, the preset spacing is greater than 0 mm and less than or equal to 10 mm. For example, the preset spacing is 1 mm, 3 mm, 5 mm, 8 mm, 10 mm, etc., and the preset spacing between two different vanes may be the same or different.

According to the technical solution of the embodiments of the present application, when the air inlet 111 needs to be closed, at least two vanes are sequentially disposed adjacent to each other along the second direction Y. Multiple vanes are arranged sequentially along the second direction Y, and adjacent vanes are aligned with each other along the second direction Y to reduce the gap between adjacent vanes and enhance the blocking effect. When the air inlet 111 needs to be closed, the driving vane moves along the first direction X to the side of the driven vane, such that the driving and driven vanes are offset along the second direction Y. In the case that the driving and driven vanes are offset, the driving vane moves relative to the driven vane along the second direction Y until it is in contact with the driven vane, thereby driving the driven vane to move synchronously. This mutual driving among vanes achieves synchronous movement while simplifying the drive structure.

In some examples, the vehicle active air-intake grille 100 requires calibration during assembly, maintenance or startup, which can be performed through the following steps.

Step 1: when the air inlet 111 is fully closed by the vanes, the vehicle active air-intake grille 100 enters into a calibration state in response to a calibration signal.

Step 2: the vanes are controlled to move towards a direction where the air inlet 111 is opened, and when all vanes are blocked and immovable, it is confirmed that the air inlet 111 has the opening-degree of 100%.

Step 3: the vanes are controlled to move towards a direction where the air inlet 111 is closed, and when all vanes are blocked and immovable, it is confirmed that the air inlet 111 has the opening-degree of 0%, completing the determination of anchor point of the opening-degree of the air inlet 111.

In some examples, the calibration signal is sent out by the vehicle-mounted control terminal. After calibration is completed, controlling the vane movement allows adjusting the opening-degree of the air inlet 111 within the range of 0% to 100%. At the 0% opening-degree, each vane is located at its corresponding second position; at the 100% opening-degree, each vane is located at its corresponding first position.

Referring to FIGS. 1 to 9 and FIGS. 20 to 28, the vehicle active air-intake grille 100 includes a frame 110 and an air-intake grille 120. The frame 110 has an air inlet 111, and the air-intake grille 120 is movably disposed on the air inlet 111 to open or close the air inlet 111; where there may be one or more air inlet 111. When multiple air inlets 111 are provided, each air inlet 111 is movably configured with the air-intake grille 120 to open or close corresponding air inlet 111 through the respective air-intake grille 120 on each air inlet 111.

In some embodiments of the present application, the frame 110 includes a frame body 112, a cross beam 113, and a longitudinal beam 116. The frame body 112 has a notch, both of the cross beam 113 and the longitudinal beam 116 are disposed within the notch and each connected to the frame body 112. The cross beam 113 extends along a second direction Y, and the cross beam 113 and the longitudinal beam 116 are arranged to intersect so as to isolate the notch into at least two air intake groups 111a, which are oppositely disposed on two opposite sides of the longitudinal beam 116. Each air intake group 111a includes at least two air inlets 111 sequentially disposed at intervals along a third direction Z, and each air inlet 111 is movably provided with the air-intake grille 120 to open or close the air inlet 111. The third direction Z has an angle with the first direction X and the second direction Y respectively.

For example, as shown in FIGS. 1 and 7, the frame 110 includes a frame body 112, a cross beam 113, and a longitudinal beam 116. The frame body 112 has a notch, both of the cross beam 113 and the longitudinal beam 116 are disposed within the notch and each connected to the frame body 112. The cross beam 113 extends along a second direction Y, and the cross beam 113 and longitudinal beam 116 are arranged to intersect so as to isolate the notch into two air intake groups 111a, which are oppositely disposed on two opposite sides of the longitudinal beam 116. That is, each side of longitudinal beam 116 has one air intake group 111a, and two air intake group 111a on two sides of longitudinal beam 116 are oppositely disposed, while each air intake group 111a includes at least two air inlets 111. For example, in FIGS. 1 and 7, one air intake group 111a includes two air inlets 111, which are disposed at intervals along the third direction Z by the cross beam 113. It should be understood that providing multiple air inlets 111 can increase the area of air intake, thereby enhancing the air intake volume, so as to improve the heat dissipation efficiency for components such as the radiator inside the vehicle.

Since the air-intake grille 120 disposed on each air inlet 111 is the same, the structure of the air-intake grille 120 will be described in detail below, instead of repeating the description for the air-intake grille 120 on every air inlet 111.

Continuing to refer to FIGS. 1 to 9, the air-intake grille 120 includes a first vane 121 and a second vane 122. The first vane 121 and second vane 122 are movably disposed on the frame 110. The first vane 121 and second vane 122 can move to the inner side or outer side of the air inlet 111 to close or open the air inlet 111. Thus, when the air inlet 111 needs to be closed, the first vane 121 and the second vane 122 move from the outer side of the air inlet 111 to the inner side of the air inlet 111, and the first vane 121 and the second vane 122 are adjacent and connected to each other along the second direction Y to close the air inlet 111 together. For example, in FIG 1, the first vane 121 and the second vane 122 are adjacent and connected to each other along the second direction Y, and are aligned along the second direction Y, such that the first vane 121 and the second vane 122 jointly shield the air inlet 111 to achieve the purpose of closing the air inlet 111.

When the air inlet 111 needs to be opened, referring to FIGS. 2 to 9, the first vane 121 moves relative to the second vane 122 along the first direction X to a side of the second vane 122, such that the first vane 121 is offset relative to the second vane 122 in the first direction X and the first vane 121 is completely located at the front or rear side of the second vane 122 in the first direction X. Subsequently, the first vane 121 moves relative to the second vane 122 along the second direction Y until the first vane 121 is in contact with the second vane 122. At this point, the first vane 121 drives the second vane 122 to continue moving, until the first vane 121 drives the second vane 122 to move completely to the outer side of the air inlet 111, i.e., both the first vane 121 and the second vane 122 completely move out of the air inlet 111, without blocking the air inlet 111 in any way, thereby achieving the purpose of opening the air inlet 111 and increasing the air intake volume of the air inlet 111.

As can be seen, compared to the related technology that the vanes can only rotate relative to the frame 112 inside the air inlet 111 so that the angles of vanes are different to adjust the air intake volume of the air inlet 111, the embodiments of the present application realize the movement of the first vane 121 and second vane 122 relative to the frame body 112 to the inner or outer side of the air inlet 111, such that when the air inlet 111 is completely opened, the first vane 121 and second vane 122 do not block the air inlet 111 at all, which can further increase the air intake area of the air inlet 111, thereby increasing the air intake volume and reducing wind resistance.

For example, the maximum heat dissipation area of the radiator is positioned opposite the air inlet 111. When the air inlet 111 is opened, the first vane 121 and second vane 122 are moved out of the air inlet 111, and the air inlet 111 is not blocked at all, increasing the air intake volume of the air inlet 111, thereby improving the heat dissipation efficiency of the radiator.

The vehicle active air-intake grille 100 provided by the present application can increase air intake volume. This allows compatibility with radiators with various different power. For instance, under the operating condition of the same cooling requirements, the heat dissipation efficiency can be improved due to large air intake volume. Therefore, a radiator with relatively low power can be selected, thereby reducing the power consumption of vehicle, further improving the energy-saving and environmental protection performance of vehicle, and also meeting the thermal management systems for different vehicle requirements, thus expanding the scope of application.

To further enhance the aesthetic appeal of the vehicle appearance, in some embodiments of the present application, with continued reference to FIGS. 2 to 9, the rear side of the driven vane along the first direction X has a movement area extending along the second direction Y. This movement area is configured to allow the movement of the driving vane; when the air inlet 111 needs to be opened, the driving vane moves along the first direction X to a position that is flush with the movement area, and then moves relative to the driven vane within the movement area.

Taking the first vane 1121 as the driving vane and the second vane 122 as the driven vane as an example, when the air inlet 111 needs to be opened, along the first direction X, the rear side of the second vane 122 has a movement area extending along the second direction Y. The rear side of the second vane 122 is, for example, a side facing the interior of the vehicle, while the front side of the second vane 122 is, for example, a side facing the exterior of the vehicle. Therefore, when the air inlet 111 needs to be opened, by providing the movement area on the rear side of the second vane 122 for the first vane 121 to move, the first vane 121 moves along the first direction X to a position aligned with the movement area, and then, the first vane 121 moves relative to the second vane 122 within the movement area along the second direction Y. When part of the structure of the first vane 121 comes into contact with the second vane 122, it can drive the second vane 122 to move synchronously toward the outer side of the air inlet 111, thereby enhancing the aesthetic appeal of the vehicle's overall exterior.

For example, as shown in FIG. 2, when the air inlet 111 needs to be opened, the first vane 121 retracts relative to the second vane 122 in the first direction X, e.g., by 10 mm, such that the first vane 121 is aligned with the movement area of the second vane 122 in the first direction X, and then the first vane 121 moves relative to the second vane 122 within the movement area under the action of a driving force.

In some embodiments of the present application, the driving vane located at the end of the air-intake grille120 is the drive vane (e.g., first vane 121). The vehicle active air-intake grille 100 further includes a first drive mechanism 130 and a second drive mechanism 140, with the first drive mechanism 130 and the second drive mechanism 140 each being connected to the drive vane. The first drive mechanism 130 is configured to drive the drive vane to move in the first direction X; the second drive mechanism 140 is configured to drive the drive vane to move in the second direction Y. When the driving vane and the corresponding driven vane are fully overlapped along the first direction X, the driving vane abuts against the corresponding driven vane along the first direction X to drive the driven vane to move along the first direction X.

In some examples, the second drive mechanism 140 is movably connected with the frame 110 along the first direction X. When the first drive mechanism 130 drives the drive vane to move along the first direction X, the second drive mechanism 140 also moves relative to the frame 110 along the first direction X. In other examples, the output shaft of the second drive mechanism 140 is hinged with the drive vane by a connecting rod, and when the drive vane moves along the first direction X, the angle of the connecting rod relative to the frame 110 changes accordingly.

In some examples, the output shaft of the first drive mechanism 130 is telescopically disposed along the second direction Y; alternatively, the transmission assembly connected between the first drive mechanism 130 and the drive vane may be telescopically disposed along the second direction Y, such that the first drive mechanism 130 can keep connection with the drive vane when the drive vane is driven to move along the second direction Y with the second drive mechanism 140.

In some examples, when projected along the first direction X, the projections of both the first drive mechanism 130 and the second drive mechanism 140 do not overlap with the projection of the air inlet 111.

In some embodiments, each vane is provided with corresponding first drive mechanism 130 and second drive mechanism 140. In other embodiments, at least two vanes share a single first drive mechanism 130 and/or at least two vanes share a single second drive mechanism 140.

Taking the first vane 121 as the drive vane as an example, the first drive mechanism 130 and the second drive mechanism 140 are each connected to the first vane 121. The first drive mechanism 130 is configured to drive the first vane 121 to move along the first direction X; the second drive mechanism 140 is configured to drive the first vane 121 to move along the second direction Y. That is, the driving force for the first vane 121 to move in the first direction X is from the first drive mechanism 130, while the driving force for the first vane 121 to move along the second direction Y is from the second drive mechanism 140.

In some embodiments of the present application, the first drive mechanism 130 includes a first drive motor 131 and a connecting rod 132. The connecting rod 132 is connected between the first drive motor 131 and the drive vane, enabling the first drive motor 131 to drive the drive vane to move along the first direction X via the connecting rod 132.

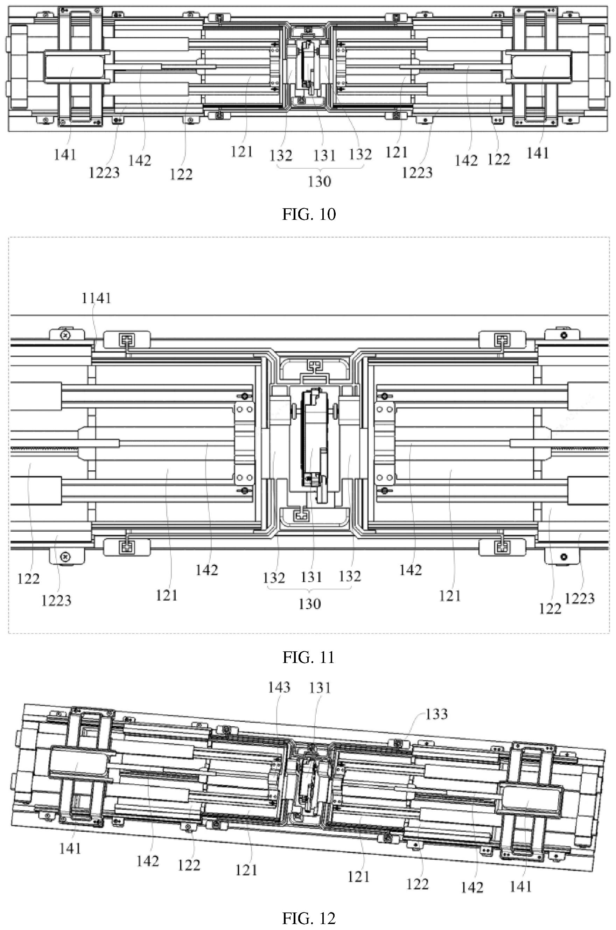

For example, taking the first vane 121 as the drive vane, referring to FIGS. 10 and 11, the first drive mechanism 130 includes a first drive motor 131 and a connecting rod 132. The connecting rod 132 is connected between the first drive motor 131 and the first vane 121, enabling the first drive motor 131 to drive the first vane 121 to move along the first direction X via the connecting rod 132.

In some embodiments of the present application, the connecting rod 132 is provided with a guide rail 133, and the frame 110 has a guide groove 115 that matches the guide rail 133 and extends along the first direction X. When the first drive motor 131 drives the connecting rod 132 to bring the drive vane to move, the guide rail 133 moves along the extension direction of the guide groove 115.

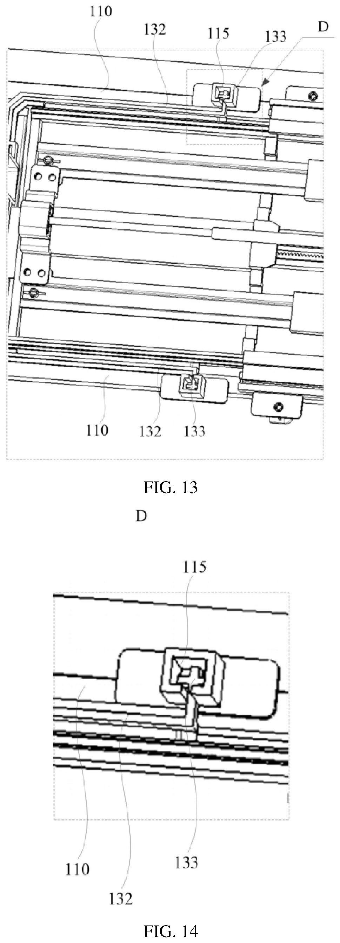

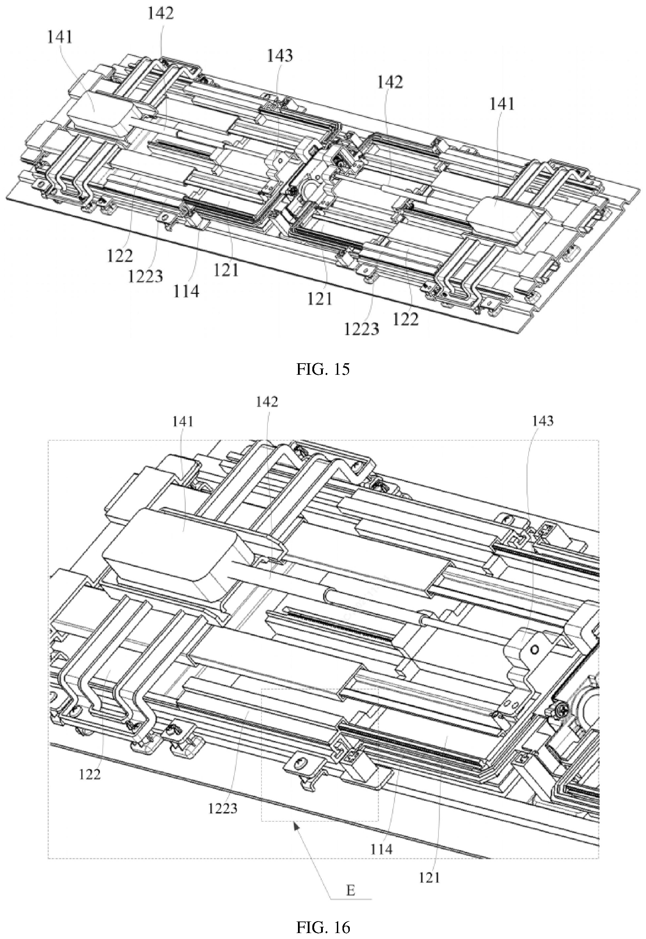

To enhance the reliability of the movement path of the first vane 121 in the first direction X, taking the first vane 121 as the drive vane as an example, referring to FIGS. 12 to 14, FIG. 16 and FIG. 17, the connecting rod 132 has a guide rail 133, and the frame 110 has a guide groove 115 that matches the guide rail 133 and extends along the first direction X. When the first drive motor 131 drives the connecting rod 132 to bring the first vane 121 to move, the guide rail 133 moves along the extension direction of the guide groove 115, so as to guide the movement of the connecting rod 132 via the guide groove 115, thereby enhancing the accuracy and reliability of the movement path of the first vane 121 in the first direction X.

In some embodiments of the present application, the first drive mechanism is disposed on the longitudinal beam and respectively connected to the drive vanes on each air inlet 111 of each air intake group 111a, to drive each drive vane to move synchronously along the first direction X; there are two second drive mechanisms 140, which are respectively disposed on two opposite sides of the longitudinal beam 116, and the second drive mechanism 140 is connected to each drive vane in the air intake group 111a at the corresponding position, driving each drive vane in corresponding air intake group 111a to move synchronously along the second direction Y.

As shown in FIGS, 7, 8, 22, and 23, when there are two air intake groups 111a oppositely disposed, the first drive mechanism 130 is disposed on the longitudinal beam 116 and connected to the first vane 121 on each air inlet 111 in two air intake groups 111a, to drive each first vane 121 to move synchronously along the first direction X; while there are two second drive mechanisms 140, which are respectively disposed on opposite sides of the longitudinal beam 116. One second drive mechanism 140 is connected to the first vane 121 in one air intake group 111a to drive each first vane 121 in the corresponding air intake group 111a to move synchronously along the second direction Y, thereby improving the efficiency of opening or closing the air inlets 111.

In some embodiments of the present application, the second drive mechanism 140 includes a second drive motor 141 and a telescopic rod 142, where the telescopic rod 142 is configured to extend and retract along the second direction Y. One end of the telescopic rod 142 is connected to the drive vane and the other end of the telescopic rod 142 is connected to the second drive motor 141. When the second drive motor 141 drives the telescopic rod 142 to extend and retract, the telescopic rod 142 drives the drive vane to move along the second direction Y.

For instance, taking the first vane 121 as the drive vane, referring to FIGS. 10 to 12, FIG. 15, FIG. 22, FIG. 23 and FIG. 24, the second drive mechanism 140 includes a second drive motor 141 and an telescopic rod 142, where the telescopic rod 142 is configured to extend and retract along the second direction Y, and one end of the telescopic rod 142 is connected to the first vane 121 and the other end of the telescopic rod 142 is connected to the second drive motor 141. When the second drive motor 141 drives the telescopic rod 142 to extend and retract, the telescopic rod 142 drives the first vane 121 to move along the second direction Y.

Where, the first vane 121 and telescopic rod 142 may be connected via a fixed bracket 143, i.e., the fixed bracket 143 is fixedly connected to the first vane 121, and one end of the telescopic rod 142 is connected to the fixed bracket 143. When the telescopic rod 142 extends or retracts, the first vane 121 can be driven to move.

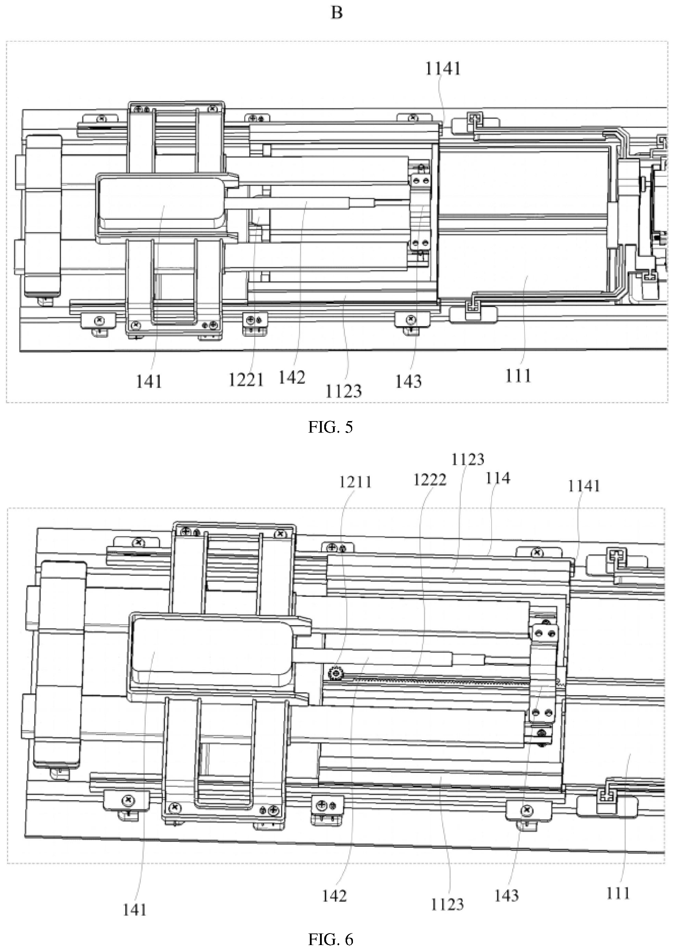

Referring to FIGS. 4 and 5, in some embodiments of the present application, the driven vane includes a first limiting structure 1221. When the driving vane moves relative to the driven vane within the movement area until it comes in contact with the first limiting structure 1221, the driving vane drives the driven vane to move to the outer side of the air inlet 111.

Taking the first vane 1121 as the driving vane and the second vane 122 as the driven vane as an example, when the air inlet 111 is opened, in order to make the first vane 121 drive the second vane 122 to move synchronously after the first vane 121 moves relative to the second vane 122 to a certain distance, the second vane 122 is provided with the first limiting structure 1221. Thus, when the first vane 121 moves relative to the second vane 122 within the movement area until it is in contact with the first limiting structure 1221, the first vane 121 drives the second vane 122 to move to the outer side of the air inlet 111.

Referring to FIGS. 4 and 5, in some embodiments of the present application, the first limiting structure 1221 is disposed at the end of the driven vane close to the edge of the frame 110. When the driving vane and driven vane are fully overlapped in the first direction X, the end of the driving vane contacts the first limiting structure 1221.

Taking the first vane 1121 as the driving vane and the second vane 122 as the driven vane as an example, as shown in FIGS. 4 and 5, the first limiting structure 1221 is disposed at the end of the second vane 122 close to the edge of the frame 110. When the first vane 121 and the second vane 122 are fully overlapped in the first direction X, the end of the first vane 121 contacts the first limiting structure 1221, such that when the first vane 121 continues to move along the second direction Y, it can drive the second vane 122 to move synchronously until they move to the outer side of the air inlet 111, thereby fully opening the air inlet 111.

To enhance the moving smoothness and path accuracy of the first vane 121 within the movement area, referring to FIG. 12, in some embodiments of the present application, the driving vane is provided with a first sliding portion 1211, and a second sliding portion 1222 that matches the first sliding portion 1211 is provided in the movement area. The second sliding portion 1222 extends along the second direction Y, and the driving vane moves along the second sliding portion 1222 via the first sliding portion 1211.

Taking the first vane 1121 as the driving vane and the second vane 122 as the driven vane as an example, the first vane 121 has a first sliding portion 1211, and a second sliding portion 1222 that matches the first sliding portion 1211 is provided in the movement area. The second sliding portion 1222 extends along the second direction Y, and the first vane 121 moves along the second sliding portion 1222 via the first sliding portion 1211. For example, the first sliding portion 1211 includes a sliding gear, and the second sliding portion 1222 includes a gear rail. The sliding gear is engaged with the gear rail. In this way, when the second drive mechanism 140 drives the first vane 121 to move, the sliding gear can move along the gear rail to enhance the smoothness and path accuracy of the movement.

In some embodiments of the present application, the rear side of the driven vane has a third sliding portion 1223 extending along the second direction Y, and a fourth sliding portion 114 is provided at a position of the frame 110 corresponding to the third sliding portion 1223. The third sliding portion 1223 is configured to be slidably connected to the fourth sliding portion 114.

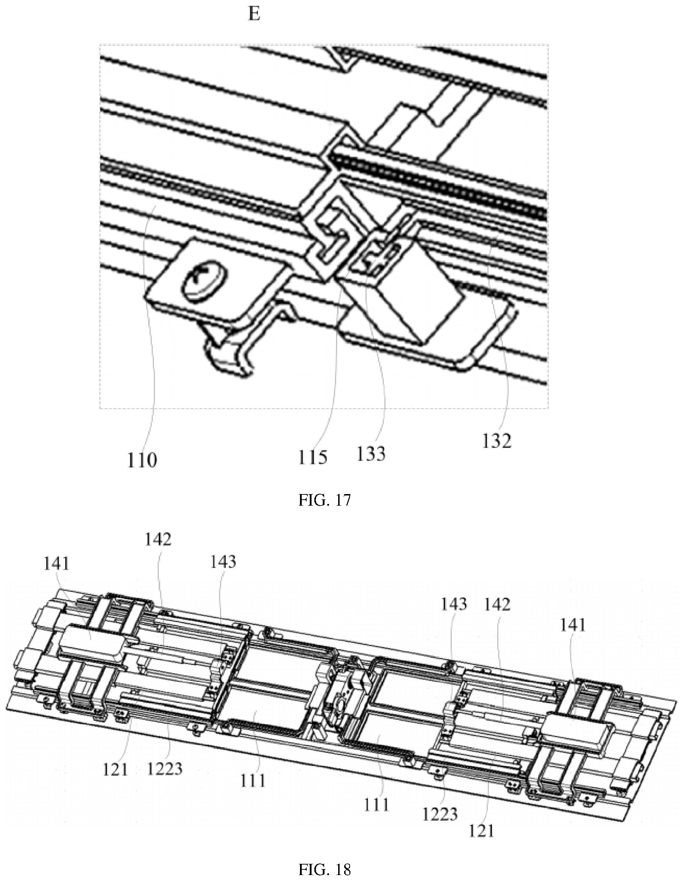

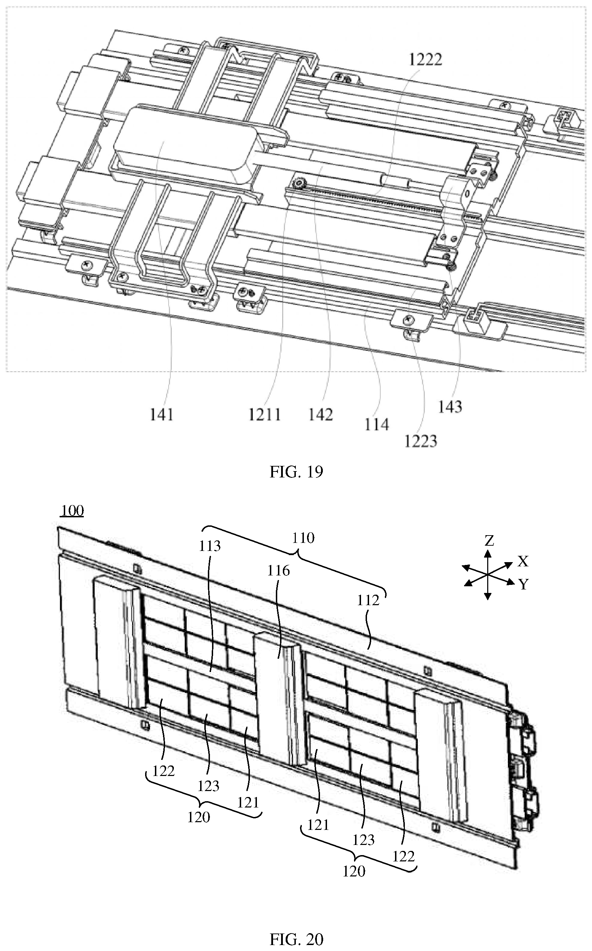

Referring to FIGS. 18 and 19, and taking the second vane 122 as the driven vane as an example, the rear side of the second vane 122 has a third sliding portion 1223 extending along the second direction Y, and a fourth sliding portion 114 is provided at a position of the frame 110 corresponding to the third sliding portion 1223. The third sliding portion 1223 is configured to be slidably connected to the fourth sliding portion 114. Consequently, it can enhance the smoothness and path accuracy of the movement of second vane 122 relative to the frame body 112, and avoid the jamming problem of the second vane 122 during movement.

For example, the third sliding portion 1223 is one of a sliding rail and a sliding groove, and the fourth sliding portion 114 is the other of a sliding rail and a sliding groove. For instance, the third sliding portion 1223 is the sliding rail and the fourth sliding portion 114 is the sliding groove, with the sliding groove moving along the extension direction of the sliding rail.

In some embodiments of the present application, along the extension direction of the fourth sliding portion, the fourth sliding portion 114 is provided with two second limiting structures 1141 spaced apart, and the third sliding portion 1223 is configured to slide between two second limiting structures 1141.

Taking the first vane 1121 as the driving vane and the second vane 122 as the driven vane as an example, in order to further enhance the accuracy of the position of the second vane 122 when the air inlet 111 is opened and the air inlet 111 is closed, the fourth sliding portion 114 has two second limiting structures 1141 spaced apart, and the third sliding portion 1223 is configured to slide between the two second limiting structures 1141. In this way, when the second vane 122 moves to the second limiting structure 1141 on the side away from the air inlet 111, the second vane 122 and the first vane 121 are completely located on outer side of the air inlet 111, fully opening the air inlet 111; when the first vane 121 drives the second vane 122 to move in the reverse direction to the second limiting structure 1141 on the side close to the air inlet 111, the second vane 122 is blocked and limited by the second limiting structure 1141, preventing the second vane 122 from moving along with the movement of the first vane 121. At this time, the second vane 122 blocks part of the air inlet 111, and the first vane 121 continues moving relative to the second vane 122 toward the inner side of the air inlet 111. When the first vane 121 moves out of the movement area, the first vane 121 is moved forward under drive of the first drive mechanism 130, for example, by 10 mm, such that the first vane 121 and the second vane 122 are connected adjacently and aligned at the air inlet 111. At this point, the first vane 121 and the second vane 122 completely close the air inlet 111.

The following will illustrate the process of opening and closing the air inlet 111 using the above scheme.

Referring to FIGS. 1 to 19, when the air inlet 111 is in the closed state, that is, both the first vane 121 and the second vane 122 are located at the air inlet 111 and completely block the air inlet 111, and the first vane 121 and the second vane 122 are adjacent and connected with each other, with the outer surfaces of the first vane 121 and the second vane 122 being aligned with each other, i.e., the air inlet 111 is in the closed state; when the air inlet 111 needs to be opened, a first drive motor 131 is started at first, such that the first drive motor 131 drives the first vane 121 to retract along the first direction X via the connecting rod 132, for example, by 10 mm, where the first drive motor 131 drives the first vane 121 in each air inlet 111 to move synchronously via the connecting rod 132. When the first vane 121 is aligned with the movement area on the rear side of the corresponding second vane 122, the second drive motor 141 is started and the second drive motor 141 retracts via the telescopic rod 142 along the second direction Y, enabling the telescopic rod 142 to drive the first vane 121 to move relative to the second vane 122. At this point, the second vane 122 is in the stationary state, and only the first vane 121 moves relative to the second vane 122 along the second direction Y toward the side of the second vane 122. When the first vane 121 moves until it fully overlaps with the second vane 122 and abuts against the first limiting structure 1221 on the second vane 122, the second drive motor 141 continues to drive the telescopic rod 142 to retract, enabling the first vane 121 to drive the second vane 122 to move synchronously along the second direction Y toward the outer side of the air inlet 111 until the air inlet 111 is fully opened. At this point, the second vane 122 abuts against the second limiting structure 1141 on the side away from the air inlet 111, thereby limiting the second vane 122 and preventing the second vane 122 from continuing to move.

When the air inlet 111 is fully opened, the second drive motor 141 drives the telescopic rod 142 to bring the first vane 121 to extend along the second direction Y. At this point, the first vane 121 drives the second vane 122 to move synchronously along the second direction Y to the inner side of the air inlet 111 until the second vane 122 moves to the second limiting structure 1141 on the side close to the air inlet 111, and the second limiting structure 1141 restricts the second vane 122 in the second direction Y. At this point, the second vane 122 is fully located at the inner side of the air inlet 111, and blocks the part of the air inlet 111. After that, the second drive motor 141 continues to drive the telescopic rod 142 to extend along the second direction Y, thereby driving the first vane 121 to continue moving toward the direction close to the longitudinal beam 116. At this point, the second vane 122 is in a stationary state, the first vane 121 moves relative to the second vane 122 until the first vane 121 moves to a position where it does not overlap with the second vane 122 in the first direction X, that is, the first vane 121 completely moves out of the movement area. Then, the first drive motor 131 drives the first vane 121 to move forward relative to the second vane 122 via the connecting rod 132, for example, by 10 mm, enabling the first vane 121 to be aligned with the second vane 122 in the first direction X and be adjacent and connected with the second vane 122 in the second direction Y, such that the air inlet 111 is in the closed state.

In summary, in the vehicle active air-intake grille provided by the embodiments of the present application, the air-intake grille is movably disposed at the air inlet and includes a first vane and a second vane, where the first vane and the second vane are capable of moving to the inner side or outer side of the air inlet. When both the first vane and the second vane move to the inner side of the air inlet and the first vane and the second vane are positioned adjacent to each other in the second direction Y, the first vane and the second vane can jointly close the air inlet. When the first vane moves relative to the second vane along the first direction X to the side of the second vane and move relative to the second vane along the second direction Y until it contacts the second vane, the first vane drives the second vane to move to the outer side of the air inlet, thereby opening the air inlet. As can be seen, when the air inlet is opened, both the first and second vanes are entirely located on the outer side of the air inlet. Consequently, neither the first vane nor the second vane blocks any position of the air inlet. This can increase the air intake volume of the air inlet, enhance the heat dissipation effect of the interior of vehicle, reduce wind resistance, lower the fuel consumption of vehicle, and improve fuel economy.

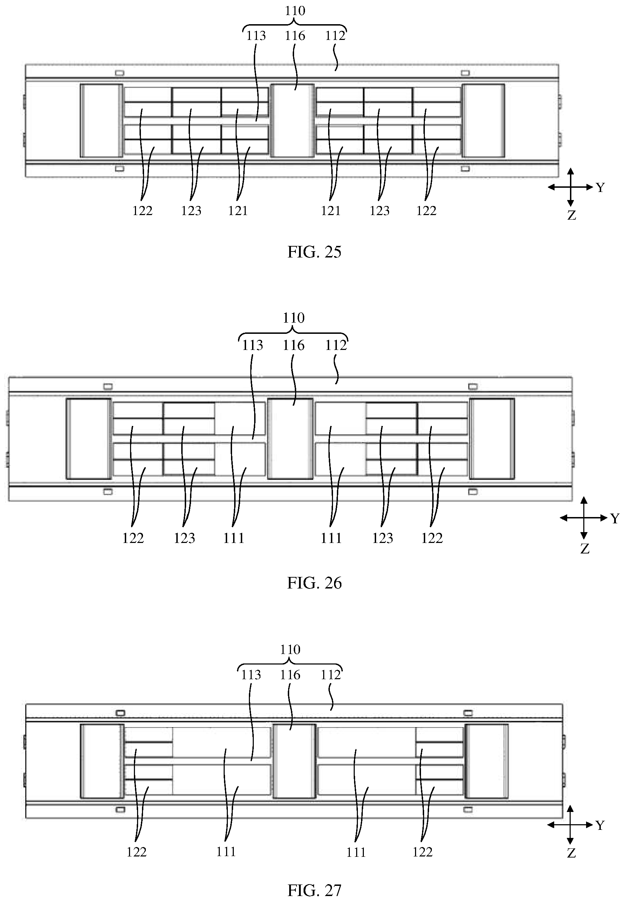

Taking an air inlet provided with three vanes as an example, and referring to FIGS. 25, 26, 27 and 28, as the opening-degree of the air inlet 111 increases from 0% to 100%, the first drive mechanism 130 drives the first vane 121 to move relative to the third vane 123 along the first direction X to the rear of the third vane 123. When a preset spacing exists between the first vane 121 and the third vane 123 along the first direction X, the second drive mechanism 140 drives the first vane 121 to move relative to the third vane 123 along the second direction Y, and the first vane 121 enters the movement area on the rear side of the third vane 123. When the first vane 121 and the third vane 123 are aligned along the first direction X, the first vane 121 is hidden on the rear side of the third vane 123, and the first vane 121 abuts against the third vane 123 along the second direction Y; the first drive mechanism 130 drives the third vane 123 via the first vane 121 to move synchronously along the first direction X to the rear of the second vane 122, when there is a preset spacing between the third vane 123 and the second vane 122 along the first direction X, the second drive mechanism 140 drives the first vane 121 to bring the third vane 123 to synchronously move relative to the second vane 122 along the second direction Y, and the first vane 121 and the third vane 123 enter the movement area behind the second vane 122. When the third vane 123 and the second vane 122 are aligned along the first direction X, the first vane 121 and the third vane 123 are hidden on the rear side of the second vane 122, and the third vane 123 abuts against the second vane 122 along the second direction Y. The first drive mechanism 130 drives the third vane 123 and the second vane 122 to synchronously move to the rear of frame 110 along the first direction X via the first vane 121. When a preset spacing exists between the second vane 122 and the frame 110 along the first direction X, the second drive mechanism 140 drives the first vane 121 to bring the third vane 123 and the second vane 122 to move synchronously relative to frame 110 along the second direction Y until all the three vanes move to the outer side of the air inlet 111.

As the opening-degree of the air inlet 111 reduces from 100% to 0%, the second drive mechanism 140 drives the first vane 121, the second vane 122 and the third vane 123 to move synchronously relative to the frame 110 along the second direction Y until the second vane 122 moves to the inner side of the air inlet 111. The first drive mechanism 130 drives the first vane 121, the second vane 122 and the third vane 123 to move synchronously relative to the frame 110 along the first direction X to a position where the second vane 122 is aligned with the frame 110 along the second direction Y; the second drive mechanism 140 drives the first vane 121 and third vane 123 to move synchronously relative to the second vane 122 along the second direction Y until the third vane 123 is misaligned with the second vane 122 along the first direction X; the first drive mechanism 130 drives the first vane 121 and the third vane 123 to move synchronously relative to the second vane 122 along the first direction X until the third vane 123 is aligned with the second vane 122 along the second direction Y. The second drive mechanism 140 drives the first vane 121 to move relative to the third vane 123 along the second direction Y until the first vane 121 is misaligned with the third vane 123 along the first direction X. The first drive mechanism 130 drives the first vane 121 to move relative to the third vane 123 along the first direction X until the first vane 121 is aligned with the third vane 123 along the third direction Z.

A second aspect of the embodiments of the present application provides a vehicle including a vehicle body and a vehicle active air-intake grille as described in the first aspect, where the vehicle active air-intake grille is disposed on the vehicle body, for example, the vehicle active air-intake grille is disposed at the front side of the vehicle body.

Regarding this, the vehicle may be a sedan, SUV, truck, sports car, cargo truck, electric vehicle, fuel-powered vehicle, etc., which is not limited here.

Additionally, the structure and operating principle of the vehicle active air-intake grille have been detailed in the aforementioned embodiments and shall not be repeated herein.

The vehicle provided in the embodiments of the present application has the same beneficial effects as the vehicle active air-intake grille provided in the aforementioned embodiments, which are not repeated herein.

It should be noted that terms such as "an embodiment," "embodiment" "exemplary embodiment" and "some embodiments" mentioned in the specification indicate that the described embodiments may include specific feature, structure, or characteristic, but not necessarily every embodiment includes such specific feature, structure or characteristic. Furthermore, such phrases do not necessarily refer to the same embodiment. Moreover, when describing specific feature, structure or characteristic in conjunction with an embodiment, it is within the knowledge of those skilled in the art to obtain such feature, structure or characteristic in combination with other embodiments, whether explicitly or implicitly described.

Generally, terms should be understood at least in part by their use in the context. For example, at least in part based on the context, the term "one or more" as used herein may be used to describe any feature, structure or characteristic in the singular sense, or may be used to describe a combination of features, structures, or characteristics in the plural sense. Similarly, at least in part based on the context, terms such as 'a' or "the" may be understood to convey singular usage or plural usage.

It should be readily understood that the terms "on", "above" and "over" in the present application should be interpreted in the broadest manner, such that 'on' does not merely mean "directly on top of something", but also encompasses the meaning of "on something" with an intermediate feature or layer therebetween. Furthermore, "above" or "over" not only includes the meaning of "above" or "over" something, but also encompasses the meaning of 'above' or "over" something without any intermediate feature or layer therebetween (i.e., directly on top of something).

Furthermore, for the convenience of explanation, spatial relative terms such as "below", "under", "downward", "above", "upward", etc., may be used herein to describe the relationship of one element or feature relative to another element or feature as shown in the drawings. Spatial relative terms are intended to encompass different orientations of the device in use or operation in addition to those shown in the drawings. The device may have other orientations (e.g., rotation by 90° or at different orientation), and the spatial relative descriptors used herein may be interpreted accordingly.

Finally, it should be noted that the above embodiments are only intended to illustrate the technical solutions of the present application, not to limit them. Although the present application has been described in detail with reference to the foregoing embodiments, those skilled in the art should understand that modifications to the technical solutions described in the foregoing embodiments, or equivalent replacements of some or all technical features therein, may still be made. Such modifications or replacements do not cause the essence of corresponding technical solutions to deviate from the scope of the technical solutions of the embodiments of the present application.

## Claims

1. A vehicle active air-intake grille, comprising:
a frame (110) having an air inlet (111);
an air-intake grille (120) comprising one or more vanes movably disposed on the frame (110), wherein the vane is capable of moving to an inner side of the air inlet (111) or an outer side of the air inlet (111) so as to close or open the air inlet (111); wherein
when the air inlet (111) needs to be closed, the vane moves from the outer side of the air inlet (111) toward the inner side of the air inlet (111) to reduce an opening-degree of the air inlet (111);
when the air inlet (111) needs to be opened, the vane moves from the inner side of the air inlet (111) toward the outer side of the air inlet (111) to increase the opening-degree of the air inlet (111).

2. The vehicle active air-intake grille according to claim 1, wherein corresponding to maximum opening-degree and minimum opening-degree of the air inlet (111), the vane has a first position and a second position relative to the frame (110);
the vane is fixable relative to the frame (110) at any position between the first position and the second position along a movement direction of the vane relative to the frame (110).

3. The vehicle active air-intake grille according to claim 2, further comprising a drive mechanism, wherein the drive mechanism is configured to drive the vane to move relative to the frame (110) and to keep the vane at a target position relative to the frame (110); and/or
the vehicle active air-intake grille (100) further comprises a locking mechanism configured to lock or unlock a movement of the vane relative to the frame (110).

4. The vehicle active air-intake grille according to claim 2, further comprising a drive mechanism and a detection mechanism, wherein the drive mechanism is electrically connected to the detection mechanism; the detection mechanism is configured to detect an operating condition information of a vehicle; and based on the operating condition information, the drive mechanism drives the vane to move relative to the frame (110) and to keep the vane at a target position relative to the frame (110).

5. The vehicle active air-intake grille according to claim 2, wherein when the air inlet (111) is at the maximum opening-degree, the vane is located at the outer side of the air inlet (111), and a first anti-rotation component of the frame (110) restricts the vane from moving from the second position toward the first position;
when the air inlet (111) is at the minimum opening-degree, the vane is located at the inner side of the air inlet (111), with multiple vanes being disposed sequentially along a movement direction of the multiple vanes, and a second anti-rotation component of the frame (110) restricts the vane from moving from the first position toward the second position.

6. The vehicle active air-intake grille according to any one of claims 1 to 5, wherein when the vane is at least two in number, two adjacent vanes are respectively a driving vane and a driven vane;
when the air inlet (111) needs to be closed, the at least two vanes are sequentially disposed adjacent to each other in a second direction (Y) so as to close the air inlet (111) together;
when the air inlet (111) needs to be opened, after the driving vane moves relative to the driven vane along a first direction (X) to a side of the driven vane and moves relative to the driven vane along the second direction (Y) until it comes into contact with the driven vane, the driving vane drives the driven vane to move to the outer side of the air inlet (111);
wherein the first direction (X) is an air intake direction of the air inlet (111), and the second direction (Y) has an angle with the first direction (X).

7. The vehicle active air-intake grille according to claim 6, wherein the air-intake grille (120) comprises a first vane (121) and a second vane (122), which are movably disposed on the frame (110), and the first vane (121) and the second vane (122) are capable of moving to the inner side of the air inlet (111) or the outer side of the air inlet (111) so as to close or open the air inlet (111);
when the air inlet (111) needs to be closed, the first vane (121) and the second vane (122) move from the outer side of the air inlet (111) to the inner side of the air inlet (111) to make the first vane (121) and the second vane (122) adjacent to each other in the second direction (Y) so as to close the air inlet (111) together;
when the air inlet (111) needs to be opened, after the first vane (121) moves relative to the second vane (122) along the first direction (X) to a side of the second vane (122) and moves relative to the second vane (122) along the second direction (Y) until it comes into contact the second vane (122), the first vane (121) drives the second vane (122) to move to the outer side of the air inlet (111).

8. The vehicle active air-intake grille according to claim 6, wherein along the first direction (X), a movement area extending along the second direction (Y) is provided at a rear side of the driven vane, and the movement area is configured for the driving vane to move;
when the air inlet (111) needs to be opened, the driving vane moves to a position aligned with the movement area along the first direction (X), and the driving vane moves relative to the driven vane within the movement area.

9. The vehicle active air-intake grille according to claim 8, wherein the driven vane has a first limiting structure (1221); when the driving vane moves relative to the driven vane within the movement area until it comes into contact the first limiting structure (1221), the driving vane drives the driven vane to move until the driven vane moves to the outer side of the air inlet (111).

10. The vehicle active air-intake grille according to claim 9, wherein the first limiting structure (1221) is disposed at an end of the driven vane close to an end at an edge of the frame (110); when the driving vane and the driven vane are fully overlapped with each other along the first direction (X), an end of the driving vane is in contact with the first limiting structure (1221).

11. The vehicle active air-intake grille according to claim 8, wherein the driving vane is provided with a first sliding portion (1211), and a second sliding portion (1222) matching the first sliding portion (1211) is disposed within the movement area; the second sliding portion (1222) extends along the second direction (Y), and the driving vane moves along the second sliding portion (1222) by means of the first sliding portion (1211).

12. The vehicle active air-intake grille according to claim 7, wherein a rear side of the second vane (122) is provided with a third sliding portion (1223) extending along the second direction (Y), the frame (110) is provided with a fourth sliding portion (114) at a position corresponding to the third sliding portion (1223), and the third sliding portion (1223) is configured to be slidably connected to the fourth sliding portion (114).

13. The vehicle active air-intake grille according to claim 12, wherein the fourth sliding portion (114) is provided with two second limiting structures (1141) that are disposed at intervals along an extension direction of the fourth sliding portion (114), and the third sliding portion (1223) is configured to slide between the two second limiting structures (1141).

14. The vehicle active air-intake grille according to claim 6, wherein the driving vane located at an end of the air-intake grille (120) is a drive vane; the vehicle active air-intake grille (100) further comprises a first drive mechanism (130) and a second drive mechanism (140); the first drive mechanism (130) and the second drive mechanism (140) are respectively connected to the drive vane, and the first drive mechanism (130) is configured to drive the drive vane to move along the first direction (X); the second drive mechanism (140) is configured to drive the drive vane to move along the second direction (Y);
when the driving vane is fully overlapped with corresponding driven vane along the first direction (X), the driving vane is abutted against the corresponding driven vane along the first direction (X) so as to drive the driven vane to move along the first direction (X).

15. The vehicle active air-intake grille according to claim 14, wherein the first drive mechanism (130) comprises a first drive motor (131) and a connecting rod (132), and the connecting rod (132) is connected between the first drive motor (131) and the drive vane such that the first drive motor (131) drives the drive vane to move in the first direction (X) by the connecting rod (132).

16. The vehicle active air-intake grille according to claim 15, wherein the connecting rod (132) is provided with a guide rail (133); the frame (110) is provided with a guide groove (115) matching the guide rail (133) and extending along the first direction (X); when the first drive motor (131) drives the connecting rod (132) to move the drive vane, the guide rail (133) moves along an extension direction of the guide groove (115).

17. The vehicle active air-intake grille according to claim 14, wherein the second drive mechanism (140) comprises a second drive motor (141) and a telescopic rod (142); the telescopic rod (142) is configured to extend and retract along the second direction (Y); one end of the telescopic rod (142) is connected to the drive vane and other end of the telescopic rod (142) is connected to the second drive motor (141); when the second drive motor (141) drives the telescopic rod (142) to extend and retract, the telescopic rod (142) drives the drive vane to move along the second direction (Y).

18. The vehicle active air-intake grille according to claim 14, wherein the frame (110) comprises a frame body (112), a cross beam (113), and a longitudinal beam (116); the frame body (112) has a notch, and both of the cross beam (113) and the longitudinal beam (116) are disposed within the notch and respectively connected to the frame body (112); the cross beam (113) extends along the second direction (Y), and the cross beam (113) and the longitudinal beam (116) are arranged to intersect so as to isolate the notch into at least two air intake groups (111a), which are oppositely disposed on two opposite sides of the longitudinal beam (116);
each air intake group (111a) comprises at least two air inlets (111) sequentially disposed at intervals along a third direction (Z), and each air inlet (111) is movably provided with the air-intake grille (120) to open or close the air inlet (111);
the third direction (Z) has an angle with the first direction (X) and the second direction (Y) respectively.

19. The vehicle active air-intake grille according to claim 18, wherein the first drive mechanism (130) is disposed on the longitudinal beam (116) and is respectively connected to drive vanes on the each air inlet (111) of the each air intake group (111a), to drive each drive vane to move synchronously along the first direction (X);
there are two second drive mechanisms (140) which are respectively disposed on two opposite sides of the longitudinal beam (116), and the second drive mechanism (140) is connected to the each drive vane in the air intake group (111a) at a corresponding position to drive the each drive vane in corresponding air intake group (111a) to move synchronously along the second direction (Y).

20. A vehicle, comprising a vehicle body and the vehicle active air-intake grille according to any one of claims 1 to 19, wherein the vehicle active air-intake grille (100) is disposed on the vehicle body.
